(19) Europäisches Patentamt

European Patent Office

Office européen des brevets

(11) **EP 1 003 013 B1**

(12) **FASCICULE DE BREVET EUROPEEN**

(45) Date de publication et mention
de la délivrance du brevet:
**20.12.2006 Bulletin 2006/51**

(51) Int Cl.:
*G01B 11/275* (2006.01)   *G03B 43/00* (2006.01)
*G01C 11/00* (2006.01)   *G01C 15/00* (2006.01)

(21) Numéro de dépôt: **99402839.7**

(22) Date de dépôt: **16.11.1999**

(54) **Détermination de la position de l'axe optique d'une caméra**

Bestimmung der Position der optischen Achse einer Kamera

Determination of the position of the optical axis of a camera

(84) Etats contractants désignés:
**DE DK GB IE IT**

(30) Priorité: **20.11.1998 FR 9814660**

(43) Date de publication de la demande:
**24.05.2000 Bulletin 2000/21**

(73) Titulaire: **FFB**
**58440 Myennes (FR)**

(72) Inventeurs:
• **Rapidel, Jean-Loup**
**27730 Bueil (FR)**
• **Lapreste, Jean-Thierry**
**63000 Clermond-Ferrand (FR)**
• **Rives, Gérard**
**63450 Chanonat (FR)**
• **Dhome, Michel**
**63430 Pont du Chateau (FR)**
• **Lavest, Jean-Marc**
**63000 Clermont-Ferrand (FR)**

(74) Mandataire: **Klunker . Schmitt-Nilson . Hirsch**
**Winzererstrasse 106**
**80797 München (DE)**

(56) Documents cités:
**DE-A- 3 143 173**   **US-A- 5 444 481**

• **PATENT ABSTRACTS OF JAPAN vol. 095, no. 005, 30 juin 1995 (1995-06-30) -& JP 07 035644 A (FUJITSU LTD), 7 février 1995 (1995-02-07)**
• **PATENT ABSTRACTS OF JAPAN vol. 012, no. 395 (E-671), 20 octobre 1988 (1988-10-20) & JP 63 136892 A (NEC CORP), 9 juin 1988 (1988-06-09)**

**Description**

La présente invention concerne un procédé et un dispositif de détermination de la position d'un repère d'observation associé à l'organe de recueil d'image d'une caméra par rapport à un repère visible solidaire de cette caméra.

Lorsqu'une caméra vidéo est mise en oeuvre dans un dispositif de détermination de la position d'un objet dans l'espace, il est nécessaire de connaître avec précision le repère géométrique d'observation associé à l'organe de recueil d'image de cette caméra. En effet, ce repère d'observation, du fait des tolérances de fabrication de la caméra, est généralement décalé par rapport au repère visible associé à la structure mécanique de la caméra.

Afin d'éviter des erreurs dans le positionnement des objets, il est nécessaire de prendre en compte ce décalage, et ainsi de déterminer la position exacte du repère d'observation par rapport au repère visible associé à la structure de la caméra, ou tout autre repère solidaire de la structure de la caméra.

Cette détermination est généralement complexe.

Le document JP 7 035 644 A décrit un procédé et un dispositif pour étalonner une caméra au moyen des miroirs. Les miroirs sont arrange parallèle ou en un angle connue et comportent un ensemble de marques de référence, de configuration géométrique connue. Dans un autre mode de réalisation, le miroir occupe deux positions distinctes autour d'une droite. Une image est capturée pour chaque position angulaire.

L'invention a pour but de fournir un procédé simple de détermination de la position du repère d'observation d'une caméra par rapport à un repère visible solidaire de cette caméra.

A cet effet, l'invention a pour objet un procédé de détermination de la position du repère d'observation associé à l'organe de recueil d'image d'une caméra par rapport à un repère visible solidaire de cette caméra, caractérisé en ce qu'il comporte les étapes suivantes :

a) on place, en regard de la caméra, un miroir comportant un ensemble de marques de référence, de configuration géométrique connue, le miroir étant orienté, de sorte que la réflexion du repère visible dans le miroir, soit observable par la caméra ;

b) on réalise à partir de la caméra une image du miroir sur laquelle apparaît l'image réfléchie du repère visible et l'ensemble de marques de référence ; et

c) on déduit la position du repère d'observation de la caméra par rapport au repère visible à partir de l'analyse de l'image obtenue par réflexion dans le miroir du repère visible et de l'ensemble de marques de référence.

Suivant des modes particuliers de mise en oeuvre, le procédé comporte l'une ou plusieurs des caractéristiques suivantes :

- à l'étape c), pour déduire la position du repère d'observation par rapport au repère visible :

c') on détermine la position du miroir par rapport au repère d'observation de la caméra à partir de l'analyse de l'image de l'ensemble des marques de référence ;

c") on détermine la position de l'image obtenue par réflexion dans le miroir (50) du repère visible par rapport au repère d'observation de la caméra ; et

c''') on détermine par calcul la position relative du repère d'observation par rapport au repère visible.

L'invention concerne en outre un procédé de détermination de la position d'un repère d'observation associé à l'organe de recueil d'image d'une caméra par rapport à une direction de l'espace définie par une droite connue, la caméra étant munie d'un repère visible solidaire de celle-ci est caractérisé en ce que :

A) on détermine la position du repère d'observation par rapport au repère visible par un procédé tel que défini ci-dessus ;

B) on réalise deux images d'un même miroir, sur lesquelles apparaît le repère visible, dans deux positions distinctes du miroir décalées angulairement autour de la droite ;

C) on déduit la position du repère d'observation par rapport à la droite, intersection des deux plans du miroir dans les deux positions distinctes, à partir de l'analyse des images obtenues par réflexion dans le miroir du repère visible et de la position déterminée du repère d'observation par rapport au repère visible.

Suivant des modes particuliers de mise en oeuvre :

- l'étape A) de détermination de la position du repère d'observation par rapport au repère visible est mise en oeuvre à partir de l'une des images réalisée à l'étape B) pour la détermination de la position du repère d'observation par rapport à la droite ; et

- le miroir est suspendu et s'étend verticalement sous l'action de son propre poids, et en ce que les deux positions distinctes du miroir, dans lesquelles sont réalisées les images, sont toutes deux des positions dans lesquelles le miroir est librement suspendu et est décalé angulairement entre ces deux positions dans le plan horizontal, ladite droite étant définie par l'axe vertical de rotation du miroir.

L'invention a en outre pour objet un dispositif de détermination de la position d'un repère d'observation associé à l'organe de recueil d'image d'une caméra par rapport à un repère visible solidaire de cette caméra, caractérisé en ce qu'il comporte :

a) en regard de la caméra, un miroir comportant un ensemble de marques de référence, de configuration géométrique connue, le miroir étant orienté, de sorte que la réflexion du repère visible dans le miroir, soit observable par la caméra ;
b) des moyens pour réaliser à partir de la caméra une image du miroir sur laquelle apparaît l'image du repère visible et l'ensemble de marques de référence ; et
c) des moyens pour déduire la position du repère d'observation de la caméra par rapport au repère visible à partir de l'analyse de l'image obtenue par réflexion dans le miroir du repère visible et de l'ensemble de marques de référence.

En particulier, lesdits moyens pour déduire la position du repère d'observation par rapport au repère visible comportent :

c') des moyens pour déterminer la position du miroir par rapport au repère d'observation de la caméra à partir de l'analyse de l'image de l'ensemble des marques de référence ;
c") des moyens pour déterminer la position de l'image obtenue par réflexion dans le miroir du repère visible par rapport au repère d'observation de la caméra ; et
c''') des moyens de calcul de la position relative du repère d'observation par rapport au repère visible.

L'invention sera mieux comprise à la lecture de la description qui va suivre, donnée uniquement à titre d'exemple et faite en se référant aux dessins, sur lesquels :

- La figure 1 est une vue de dessus d'une installation optique selon l'invention adaptée pour déterminer les positions relatives des quatre roues d'un véhicule automobile ;
- Les figures 2A et 2B sont des vues en perspective d'un même système optique de référence du dispositif de la figure 1 sur lesquelles sont représentés respectivement un repère d'observation propre à l'organe de recueil d'image et un repère visible défini par un ensemble de points de référence ;
- La figure 3 est une vue en perspective d'un système optique de référence disposé face à un miroir qui est déplaçable entre deux positions, afin de déterminer la position du repère d'observation du système optique par rapport à son repère visible ; et
- La figure 4 est une vue schématique illustrant la détermination selon l'invention des positions relatives des repères d'observation de deux systèmes optiques en regard.

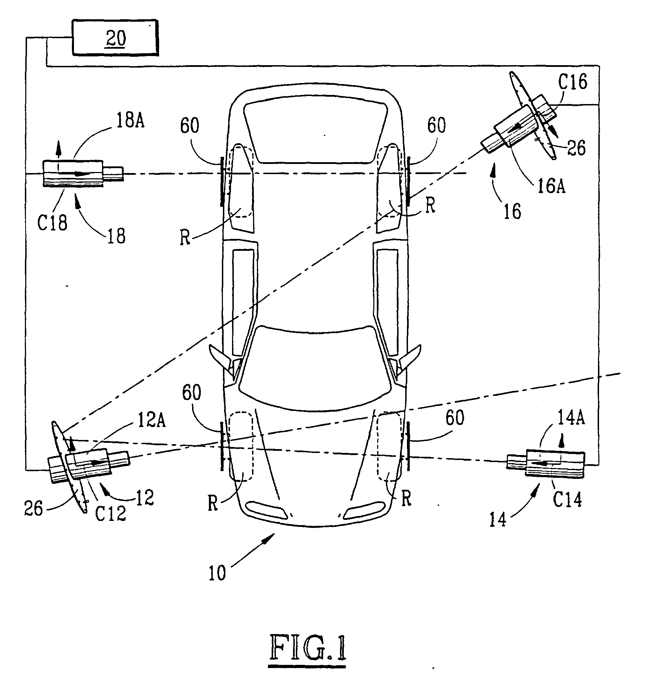

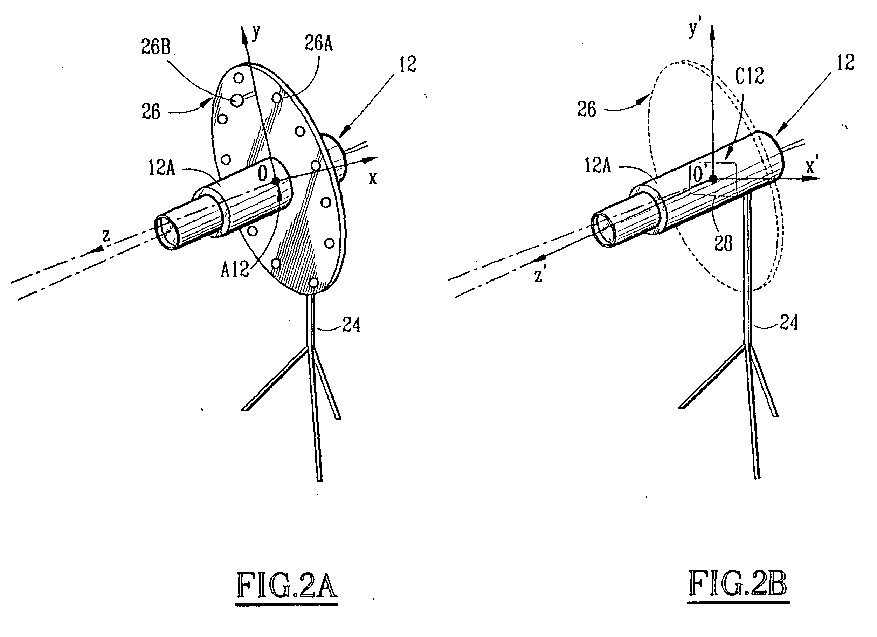

L'installation représentée sur la figure 1 est destinée à déterminer, de manière optique, les positions relatives des quatre roues R d'un véhicule automobile désigné par la référence 10.
L'installation comporte quatre systèmes optiques 12, 14, 16, 18 associés chacun à une roue R du véhicule. Ils comportent chacun une caméra vidéo CCD notée 12A, 14A, 16A, 18A. Ces quatre caméras sont reliées à une unité centrale de traitement d'informations 20 formée par exemple par un ordinateur adapté pour traiter les images reçues.
Les systèmes optiques 12, 14, 16, 18 sont déplaçables les uns par rapport aux autres autour du véhicule 10. Pour un fonctionnement correct de l'installation, les systèmes optiques sont disposés immobiles aux quatre sommets d'un quadrilatère, notamment un rectangle entourant le véhicule.
Le système optique 12 est représenté en perspective sur les figures 2A et 2B. La caméra vidéo 12A est supportée par un trépied 24 adapté pour être posé sur le sol. En outre, la caméra 12A est solidaire d'une cible 26 définissant un repère visible (O,xyz) noté A12, et visible sur la figure 2A. La cible 26 est immobilisée par des moyens mécaniques par rapport à la structure de la caméra et notamment par rapport à son repère d'observation (O',x'y'z') noté C12. Le repère d'observation C12 est lié à l'organe 28 de recueil d'image de la caméra 12A et notamment à son capteur CCD.
Le système optique 12 constitue un système optique de référence. De même, le système optique 16, disposé dans le coin opposé par rapport au véhicule dans la configuration de la figure 1, constitue également un système optique de référence et a une structure identique à celle du système optique 12.
Au contraire, les systèmes optiques 14 et 18 sont dépourvus de cible et comportent une simple caméra vidéo 14A, 18A portée par un trépied de support.

En variante, les systèmes optiques 14 et 18 sont de même structure que les systèmes optiques 12 et 16. Dans ce cas, les quatre systèmes optiques sont des systèmes optiques de référence, ce qui permet des mesures redondantes et donc une plus grande fiabilité du résultat de ces mesures.

Comme représenté sur la figure 2A, la cible 26 est formée, par exemple, par un disque de centre O à la périphérie duquel sont répartis douze points coplanaires 26A. En outre, la cible 26 comporte un treizième point 26B disposé en avant du plan principal du disque comportant les douze points 26A.

Ce point particularise angulairement le disque 26 et permet de définir deux axes orthogonaux, Ox et Oy dans le plan de la cible. L'axe Oy passe avantageusement au droit du point 26B.

La cible 26 présente un axe principal de symétrie défini par les douze points coplanaires répartis régulièrement à la périphérie du disque. L'axe principal de symétrie forme un axe Oz perpendiculaire aux axes Ox, Oy.

Les axes Oz, Oy, Oz et le point O définissent le repère visible A12.

Ainsi, la cible 26 constitue un ensemble de points de référence, de configuration géométrique connue définissant le repère visible A12. Celui-ci est immobilisé dans une position déterminable par rapport au repère d'observation C12 de la caméra.

Comme représenté sur la figure 2B, le repère d'observation C12 a pour centre, noté O', le centre du capteur CCD de la caméra 12A. Le repère d'observation est défini par un trièdre (O'x', O'y', O'z'), où O'z' est l'axe optique de la caméra, O'x' est un axe parallèle aux lignes horizontales de pixels du capteur CCD et O'y' est un axe parallèle aux colonnes verticales de pixels du capteur CCD.

La configuration géométrique de l'ensemble des points de référence de la cible 26 est mémorisée dans l'unité de traitement d'informations 20.

L'unité de traitement d'informations 20 comporte des moyens de mise en oeuvre d'algorithmes de détermination de la position d'un objet dans l'espace. En particulier, elle est adaptée pour déterminer la position d'un objet portant un ensemble de points de référence disposés suivant une configuration géométrique connue, cette configuration étant préalablement mémorisée dans l'unité 20. Cette position est déterminée à partir de l'image de cet objet prise par une caméra reliée à l'unité de traitement d'informations. La position de l'objet dans l'espace est calculée par rapport au repère d'observation C12 de la caméra. L'algorithme mis en oeuvre est de tout type adapté et par exemple du type de celui décrit dans la demande WO 94/05969.

En vue de la mise en oeuvre de tels algorithmes, il convient d'utiliser des caméras préalablement étalonnées pour compenser les erreurs résultant des imperfections de la caméra et du capteur qu'elle comporte.

A cet effet, on détermine, pour chaque caméra, ses caractéristiques intrinsèques (repère d'observation, distance focale, taille des éléments d'image ou pixels, distorsion radiale, distorsion tangentielle) et ses caractéristiques extrinsèques (matrices de rotation et de translation qui, appliquées à l'objet observé, forment une image strictement identique à l'image observée par la caméra débarrassée de ses distrosions). On détermine ainsi par des méthodes connues les corrections devant être apportées aux images produites afin de déterminer une position correcte d'un objet dans l'espace.

Pour la mise en oeuvre du procédé selon l'invention, il est nécessaire de connaître, pour chaque système optique de référence 12, 16, les positions relatives du repère d'observation de la caméra, et du repère visible défini par la cible. En effet, il est extrêmement délicat, voire impossible, lors de l'immobilisation de la cible sur la caméra, de fixer celle-ci de sorte que les deux repères C12 et A12 soient exactement confondus.

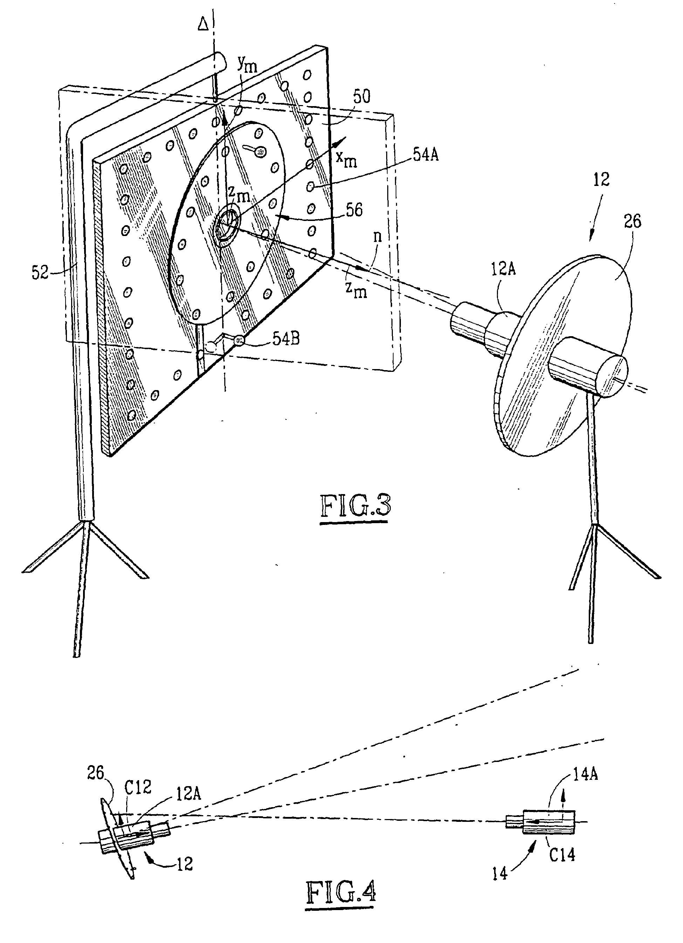

Sur la figure 3 est illustré le procédé mis en oeuvre pour déterminer la position relative des deux repères C12 et A12 propre au système optique 12. Le procédé utilisé pour le système optique 16 est analogue.

Suivant ce procédé, le système optique 12 est disposé en regard de la face réfléchissante d'un miroir plan 50. Ce miroir est suspendu à une potence 52. Les moyens de suspension sont adaptés pour un mouvement libre de rotation du miroir autour d'un axe vertical $\Delta$.

Le miroir 50 comporte sur sa face réfléchissante un ensemble de marques de référence 54A constituées par des disques noirs répartis, en figure géométrique connue tel qu'un carré, à la périphérie du miroir. Une marque de référence supplémentaire 54B est disposée en avant de la face réfléchissante du miroir 50. La configuration géométrique des marques de référence 54A et 54B est connue et mémorisée dans l'unité de traitement d'informations 20.

Sur la figure 3, la normale au miroir 50 est notée n. Cette normale est perpendiculaire au miroir et passe par le centre de la figure délimitée par l'ensemble des marques 54A et 54B. Le miroir comporte un repère propre ($O_m$, $x_m y_m z_m$) dont le centre $O_m$ est le centre de la figure délimitée par les marques 54A. L'axe $O_m z_m$ s'étend suivant la normale n. Les axes $O_m x_m$ et $O_m y_m$ s'étendent perpendiculairement l'un à l'autre dans le plan du miroir 50. Avantageusement l'axe $O_m y_m$ s'étend parallèlement à l'axe $\Delta$.

La cible 26, portant l'ensemble des points de référence 26A et 26B, se réfléchit sur la surface réfléchissante du miroir 50 et forme sur le miroir une image de la cible notée 56.

Ainsi, la caméra 12A recueille, dans le repère d'observation C12, une image de la face réfléchissante du miroir 50 comportant d'une part l'ensemble des marques de référence 54A et 54B, et d'autre part l'image réfléchie 56 de la cible portée par le système optique.

La caméra 12A étant reliée à l'unité de traitement d'informations 20, celle-ci détermine, à partir de l'algorithme mémorisé, la position du miroir 50 par rapport au repère d'observation C12 à partir de l'image prise de l'ensemble des marques de référence 54A et 54B portées par le miroir.

De même, l'unité de traitement d'informations 20 détermine, par mise en oeuvre de l'algorithme mémorisé, la position de l'image virtuelle de la cible 26 par rapport au repère d'observation C12 de la caméra. Plus particulièrement, l'unité de traitement d'informations 20 détermine la position d'un repère visible virtuel $(O'',x''y''z'')$ associé à l'image virtuelle de la cible 26 par rapport au repère d'observation $(O',x'y'z')$ de la caméra.

Le repère visible virtuel $(O'', x''y''z'')$ est l'image virtuelle du repère visible $(O,xyz)$ obtenue par réflexion dans le miroir 50.

A partir des positions relatives, du repère d'observation $(O',x'y'z')$ par rapport au repère du miroir $(O_m,x_my_mz_m)$ d'une part, et du repère visible virtuel $(O'',x''y''z'')$ par rapport au repère d'observation $(O',x'y'z')$ d'autre part, l'unité centrale de traitement d'informations 20 détermine la position du repère d'observation $(O',x'y'z')$ de la caméra, par rapport au repère visible $(O,xyz)$ défini par la cible 26.

A cet effet, l'unité de traitement d'informations 20 procède de la manière suivante.

Par l'algorithme mis en oeuvre par l'unité 20, la position de l'image virtuelle, correspondant à l'image 56 de la cible et obtenue par réflexion dans le miroir 50, est déterminée par analyse de l'image recueillie par la caméra 12A.

Ce positionnement permet de déterminer une matrice $M_{o-v}$ de passage entre le repère virtuel $(O'',x''y''z'')$ lié à l'image virtuelle et le repère d'observation $(O',x'y'z')$. Ce changement de repère s'exprime, sous forme matricielle, de la manière suivante :

$$\begin{bmatrix} x'' \\ y'' \\ z'' \\ 1 \end{bmatrix} = M_{o-v} \begin{bmatrix} x' \\ y' \\ z' \\ 1 \end{bmatrix} \text{ où } M_{o-v} = \begin{bmatrix} R & T \\ 0 & 1 \end{bmatrix} : M_{o-v} \text{ étant une matrice 4x4.}$$

où R est une sous-matrice de rotation 3x3
T est une sous-matrice de translation 1x3 ;
$(x'',y'',z'')$ sont les coordonnées d'un point M dans le repère visible virtuel $(O'',x''y''z'')$ ; et
$(x',y',z')$ sont les coordonnées du point M dans le repère d'observation $(O',x'y'z')$.

Par un algorithme de même type, l'unité de traitement d'informations 20 détermine la position du miroir 50, et notamment de son repère associé $(O_m,x_my_mz_m)$ dans le repère d'observation $(O',x'y'z')$ lié à la caméra. Pour ce faire, l'unité de traitement d'informations 20 analyse l'image du miroir 50 recueillie par la caméra et détermine la position du miroir 50 à partir de l'analyse de la position des marques de référence 54A et 54B apparaissant sur l'image.

Une matrice de passage $M_m$, entre le repère d'observation $(O',x'y'z')$ et le repère $(O_m,x_my_mz_m)$ du miroir est ainsi déterminée. Les coordonnées d'un même point M dans les deux repères sont donc liées par la relation :

$$\begin{bmatrix} x_m \\ y_m \\ z_m \\ 1 \end{bmatrix} = M_m \begin{bmatrix} x' \\ y' \\ z' \\ 1 \end{bmatrix} \text{ où } M_m = \begin{bmatrix} R_m & T_m \\ 0 & 1 \end{bmatrix} \qquad (1)$$

avec $R_m$ est une sous-matrice de rotation 3x3
$T_m$ est une sous-matrice de translation 1x3 ; et
$(x_m,y_m,z_m)$ sont les coordonnées du point M dans le repère du miroir $(O_m,x_my_mz_m)$.
d'où l'on déduit :

$$\begin{bmatrix} x' \\ y' \\ z' \\ 1 \end{bmatrix} = M_m^{-1} \begin{bmatrix} x_m \\ y_m \\ z_m \\ 1 \end{bmatrix}$$

où $M_m^{-1}$ est l'inverse de la matrice $M_m$.

Ainsi, il est possible d'exprimer, dans le repère visible virtuel (O",x" y"z") les coordonnées d'un point M en fonction de ses coordonnées dans le repère du miroir ($O_m,x_m y_m z_m$) par la relation matricielle suivante :

$$\begin{bmatrix} x'' \\ y'' \\ z'' \\ 1 \end{bmatrix} = M_{o'\text{-}v'} \begin{bmatrix} x_m \\ y_m \\ z_m \\ 1 \end{bmatrix} \text{ avec } M_{o\text{-}v}' = M_{o\text{-}v} * M_m^{-1} \text{ où } * \text{ est le produit matriciel}$$

Afin de déterminer la position d'un point réel M dans le repère du miroir ($O_m,x_m y_m z_m$), on utilise la propriété selon laquelle l'image virtuelle d'un point de coordonnées (x,y,z) dans un repère donné, lorsque le miroir s'étend suivant le plan Ox, Oy, a pour coordonnées (x,y,-z).

Ainsi, les coordonnées (x",y",z") de l'image virtuelle dans le repère visible virtuel du point M de coordonnées (x,y,z) dans le repère visible sont obtenues par l'application de la matrice diagonale $S_z$ suivante :

$$\begin{bmatrix} 1 & 0 & 0 & 0 \\ 0 & 1 & 0 & 0 \\ 0 & 0 & -1 & 0 \\ 0 & 0 & 0 & 1 \end{bmatrix}$$

Les coordonnées (xyz) d'un point M exprimées dans le repère visible (O,xyz) s'expriment, en fonction des coordonnées ($x_m y_m z_m$) de ce même point dans le repère du miroir ($O_m,x_m y_m z_m$), sous la forme :

$$\begin{bmatrix} x \\ y \\ z \\ 1 \end{bmatrix} = M_{o'\text{-}v}' * S_z \begin{bmatrix} x_m \\ y_m \\ z_m \\ 1 \end{bmatrix} \qquad (2)$$

En notant $M_o' = M_{o\text{-}v}' * S_z$, $M_o'$ est donc la matrice de passage du repère du miroir ($O_m,x_m y_m z_m$) au repère visible (O,xyz).

Afin de déterminer les coordonnées d'un point dans le repère visible (O,xyz) à partir des coordonnées (x',y', z') du même point dans le repère d'observation (O,x'y'z'), on déduit des relations (1) et (2) la relation matricielle suivante :

$$\begin{bmatrix} x \\ y \\ z \\ 1 \end{bmatrix} = M_o \begin{bmatrix} x' \\ y' \\ z' \\ 1 \end{bmatrix} \qquad \text{avec } M_o = M_{o\text{-}v} * M_m^{-1} * S_z * M_m.$$

Ainsi, on conçoit que l'unité centrale de traitement d'informations 20 peut, par mise en oeuvre du calcul exposé ci-dessus, déterminer la position du repère d'observation C12 associé à la caméra par rapport au repère visible A12 associé à la cible 26 solidaire de cette caméra.

De plus, selon l'invention, il est prévu de positionner l'ensemble des systèmes optiques, et notamment les systèmes optiques de référence par rapport à la verticale du lieu de contrôle du véhicule.

A cet effet, on détermine une image du miroir 50 dans une première position de celui-ci, représentée en traits forts sur la figure 3. On déplace ensuite le miroir jusqu'à une seconde position représentée en traits mixtes sur la figure 3. Le déplacement est opéré autour de l'axe Δ de suspension du miroir. Cet axe Δ correspond à la verticale du lieu d'exploitation de l'installation.

A partir de l'algorithme mémorisé, l'unité centrale de traitement d'informations 20 détermine, pour les deux positions du miroir, les coordonnées des plans dans lesquels s'étend le miroir. La droite Δ correspondant à l'intersection des deux plans ainsi déterminés. L'unité centrale de traitement d'informations 20 détermine ainsi la position relative du système optique de référence par rapport à une famille de plans horizontaux qui sont d'une importance capitale pour le cas particulier de la géométrie des véhicules.

Sur la figure 4, sont représentées schématiquement les systèmes optiques 12 et 14 en regard, en l'absence du véhicule automobile 10. Les systèmes optiques 12 et 14 sont disposés, comme sur la figure 1, l'un en face de l'autre avec un espace suffisant pour permettre le passage du véhicule 10.

Afin de déterminer par exemple la position relative des roues avant du véhicule, il convient de déterminer les positions relatives des repères d'observations associés aux systèmes optiques 12 et 14. Ceux-ci sont désignés par la figure 6 par C12 et C14.

La matrice de passage entre le repère d'observation C12 et le repère visible A12 est connue, puisque déterminée selon la méthode exposée précédemment.

Afin de déterminer les positions relatives des repères d'observation C12 et C14, le système optique 14 réalise, sous la commande de l'unité de traitement d'informations 20, une image de la cible 26. Cette image est traitée par l'unité de traitement d'informations 20.

Celle-ci, connaissant la configuration géométrique de l'ensemble des points de référence de la cible 26, détermine, par mise en oeuvre de l'algorithme mémorisé, la position relative de la cible 26 par rapport au repère d'observation C14 du système optique observant. Elle en déduit ainsi la position du repère visible A12 défini par la cible 26 par rapport au repère d'observation C14.

Connaissant la matrice de passage du repère d'observation C12 au repère visible A12 et inversement, l'unité centrale de traitement d'informations 20 détermine les positions relatives des repères d'observation C12 et C14.

Ainsi, l'unité centrale de traitement d'informations 20 détermine la position relative entre les repères d'observation associés aux deux systèmes optiques en regard 12 et 14.

De même, le système optique 16 disposé du côté opposé au système optique 12 par rapport à l'emplacement du véhicule 10 observe la cible 26 portée par le système optique 12 en l'absence de véhicule. De manière analogue, l'unité de traitement d'informations 20 détermine la position du repère d'observation, noté C16, associé au système optique 16 par rapport au repère d'observation C12 du système optique de référence.

Enfin, le système optique 16 étant également muni d'une cible immobilisée par rapport à la caméra incorporée dans ce système optique, l'observation de celui-ci à partir du système optique 18 permet, à l'unité centrale de traitement d'informations 20, de déterminer la position du repère d'observation noté C18 associé au système optique 18 par rapport au repère d'observation C16 du système optique de référence 16.

En effet, de manière analogue au procédé décrit en regard de la figure 4, la connaissance des positions relatives du repère visible de la cible portée par le système optique 16 et du repère d'observation associé au système optique 16 permet de déterminer les positions relatives des repères d'observation C16 et C18.

Ainsi, par chaînage, si un système optique est dit de référence, l'ensemble de l'installation est référencée.

Après mise en place du véhicule 10, les quatre systèmes optiques ne peuvent plus s'observer l'un l'autre. Toutefois, chacun d'eux est susceptible de prendre une image d'une roue R du véhicule.

Comme décrit dans la demande WO-94/05969, chaque roue est munie d'une cible ou applique 60 reliée rigidement et de manière connue à la roue. Chaque applique comporte un ensemble de marques réparties suivant une configuration géométrique connue et mémorisée dans l'unité de traitement d'information 20.

Avant de procéder à la détermination des positions relatives des appliques et donc celles des roues, il convient de prendre en compte le voile de chaque applique et son excentrage afin que l'unité centrale de traitement d'informations 20 en tienne compte lors des calculs ultérieurs. A cet effet, et suivant un procédé connu en soi, l'unité 20 analyse plusieurs images de chaque roue prises dans des positions distinctes déterminées.

A partir de l'observation simultanée de chaque applique 60 depuis les quatre systèmes optiques, l'unité centrale de traitement d'informations 20 détermine la position relative de chaque roue par rapport au repère d'observation de la caméra associée comme connu en soi. En effet, le centre des roues étant connu, les plans horizontaux étant connus, leur section avec le plan des roues étant connue, la verticale du lieu étant connue, il est aisé de retrouver les angles et les distances caractéristiques de la géométrie du véhicule.

Connaissant les positions relatives des repères d'observation des quatre systèmes optiques, l'unité centrale de traitement d'informations 20 déduit les positions relatives des quatre roues du véhicule. Il est ainsi possible de déterminer la géométrie du véhicule et d'effectuer toute opération de réglage nécessaire au fonctionnement satisfaisant du véhicule.

On conçoit qu'avec une telle installation, la position des quatre systèmes optiques peut être modifiée pour chaque véhicule. De plus, il n'est pas nécessaire entre chaque opération de mesure de maintenir une position fixe entre les systèmes optiques. Il suffit simplement qu'entre chaque véhicule, l'unité 20 détermine à nouveau les positions relatives des repères d'observation associés aux différents systèmes optiques, suivant le procédé expliqué précédemment. Ainsi, l'installation est d'un faible encombrement et peut être entreposée facilement en dehors des phases d'utilisation.

Par ailleurs, l'installation et le procédé décrits ici sont généralisables à un nombre quelconque de caméras référencées les unes par rapport aux autres. Ainsi, il est possible de mesurer le véhicule dans différentes attitudes et à des hauteurs différentes.

## Revendications

**1.** Procédé de détermination de la position d'un repère d'observation (C12) associé à l'organe (28) de recueil d'image d'une caméra (12A) par rapport à un repère visible (26) solidaire de cette caméra, **caractérisé en ce qu'**il comporte les étapes suivantes :

> a) on place, en regard de la caméra (12A), un miroir (50) comportant un ensemble de marques de référence (54), de configuration géométrique connue, le miroir (50) étant orienté, de sorte que la réflexion du repère visible (26) dans le miroir (50), soit observable par la caméra (12A) ;
> b) on réalise à partir de la caméra (12A) une image du miroir (50) sur laquelle apparaît l'image (56) réfléchie du repère visible (26) et l'ensemble de marques de référence (54) ; et
> c) on déduit la position du repère d'observation (C12) de la caméra (12A) par rapport au repère visible (26) à partir de l'analyse de l'image obtenue par réflexion dans le miroir (50) du repère visible (26) et de l'ensemble de marques de référence (54).

**2.** Procédé selon la revendication 1, **caractérisé en ce que**, à l'étape c), pour déduire la position du repère d'observation (C12) par rapport au repère visible (26) :

> c') on détermine la position du miroir (50) par rapport au repère d'observation (C12) de la caméra (12A) à partir de l'analyse de l'image de l'ensemble des marques de référence (54) ;
> c") on détermine la position de l'image (56) obtenue par réflexion dans le miroir (50) du repère visible (26) par rapport au repère d'observation (C12) de la caméra (12A); et
> c''') on détermine par calcul la position relative du repère d'observation (C12) par rapport au repère visible (26).

**3.** Procédé de détermination de la position d'un repère d'observation (C12) associé à l'organe (28) de recueil d'image d'une caméra (12A) par rapport à une direction de l'espace définie par une droite (Δ) connue, la caméra (12A) étant munie d'un repère visible (26) solidaire de celle-ci, **caractérisé en ce que** :

> A) on détermine la position du repère d'observation (C12) par rapport au repère visible (26) par un procédé selon l'une quelconque des revendications précédentes ;
> B) on réalise deux images d'un même miroir (50), sur lesquelles apparaît le repère visible (26), dans deux positions distinctes du miroir (50) décalées angulairement autour de la droite (Δ) ;
> C) on déduit la position du repère d'observation (C12) par rapport à la droite (Δ), intersection des deux plans du miroir dans les deux positions distinctes, à partir de l'analyse des images obtenues par réflexion dans le miroir (50) du repère visible (26) et de la position déterminée du repère d'observation (12C) par rapport au repère visible (26).

**4.** Procédé selon la revendication 3, **caractérisé en ce que** l'étape A) de détermination de la position du repère d'observation (C12) par rapport au repère visible (26) est mise en oeuvre à partir de l'une des images réalisée à l'étape B) pour la détermination de la position du repère d'observation (C12) par rapport à la droite (Δ).

**5.** Procédé selon la revendication 3 ou 4, **caractérisé en ce que** le miroir (50) est suspendu et s'étend verticalement sous l'action de son propre poids, et **en ce que** les deux positions distinctes du miroir (50), dans lesquelles sont réalisées les images, sont toutes deux des positions dans lesquelles le miroir est librement suspendu et est décalé angulairement entre ces deux positions dans le plan horizontal, ladite droite (Δ) étant définie par l'axe vertical de rotation du miroir (50).

**6.** Dispositif de détermination de la position d'un repère d'observation (C12) associé à l'organe (28) de recueil d'image d'une caméra (12A) par rapport à un repère visible (26) solidaire de cette caméra, **caractérisé en ce qu'**il comporte :

> a) en regard de la caméra (12A), un miroir (50) comportant un ensemble de marques de référence (54), de configuration géométrique connue, le miroir (50) étant orienté, de sorte que la réflexion du repère visible (26) dans le miroir (50), soit observable par la caméra (12A);

b) des moyens (20) pour réaliser à partir de la caméra (12A) une image du miroir (50) sur laquelle apparaît l'image (56) du repère visible (26) et l'ensemble de marques de référence (54) ; et

c) des moyens (20) pour déduire la position du repère d'observation (C12) de la caméra (12A) par rapport au repère visible (26) à partir de l'analyse de l'image obtenue par réflexion dans le miroir (50) du repère visible (26) et de l'ensemble de marques de référence (54).

**7.** Dispositif selon la revendication 6, **caractérisé en ce que** lesdits moyens pour déduire la position du repère d'observation (C12) par rapport au repère visible (26) comportent :

c') des moyens pour déterminer la position du miroir (50) par rapport au repère d'observation (C12) de la caméra (12A) à partir de l'analyse de l'image de l'ensemble des marques de référence (54) ;

c") des moyens pour déterminer la position de l'image (56) obtenue par réflexion dans le miroir (50) du repère visible par rapport au repère d'observation (C12) de la caméra (12A) ; et

c''') des moyens de calcul de la position relative du repère d'observation (C12) par rapport au repère visible (26).

**Claims**

**1.** A method of determination of the position of an observation coordinate system (C12) asscociated to a picture receiving organ (28) of a camera (12A) in relation to a visible coordinate system (26), which is fixed to the camera, **characterized in that** it comprises the following steps:

a) a mirror (50) is set up opposite to the camera (12A), which has an arrangement of reference points (54) of known geometric configuration, the mirror (50) being orientated such that the reflection of the visible coordinate system (26) in the mirror (50) is observable by the camera (12A),

b) a picture of the mirror (50) is generated by the camera (12A), in which appear the reflected picture (56) of the visible coordinate system (26) and the arrangement of reference points (54); and

c) the position of the observation coordinate system (C12) of the camera (12A) in relation to the visible coordinate system (26) is determined, from the analysis of the picture obtained by the reflection in the mirror (50) of the visible coordinate system (26) and of the arrangement of reference points (54).

**2.** The method according to claim 1, **characterized in that** in step c), in order to determine the position of the observation coordinate system (C12) in relation to the visible coordinate system (26):

c') the position of the mirror (50) in relation to the observation coordinate system (C12) of the camera (12A) is determined from the analysis of the picture of the arrangement of reference points (54);

c") the position of the picture (56) obtained by the reflection in the mirror (50) of the visible coordinate system (26) in relation to the observation coordinate system (C12) of the camera (12A) is determined; and

c''') the relative position of the observation coordinate system (C12) in relation to the visible coordinate system (26) is determined by calculation.

**3.** A method for determining the position of an observation coordinate system (C12) asscociated to the picture receiving organ (28) of a camera (12A) in relation to a spatial direction defined by a known straight line (Δ), wherein the camera (12A) is equipped with a visible coordinate system (26) which is fixed to it, **characterized in that**:

A) the position of the observation coordinate system (C12) in relation to the visible coordinate system (26) is determined by a method according to one of the preceding claims;

B) two pictures of the same mirror (50) are realized on which the visible coordinate system (26) appears in two different positions of the mirror (50), which are shifted by an angle around the straight line (Δ);

C) the position of the observation coordinate system (C12) is determined in relation to the straight line (Δ), which corresponds to the intersection of the two planes of the mirror (50) in the two different positions, from the analysis of the pictures obtained by the reflection in the mirror (50) of the visible coordinate system (26) and the determined position of the observation coordinate system (C12) in relation to the visible coordinate system (26).

**4.** The method according to claim 3 **characterized in that**, that the step A) of the determination of the position of the observation coordinate system (C12) in relation to the visible coordinate system (26) is carried out based on one of the pictures realized in step B) for the determination of the position of the observation coordinate system (C12) in relation to the straight line ($\Delta$).

5. The method according to claim 3 or 4, **characterized in that** the mirror (50) is hung up and elongates vertically under the influence of its own weight and **in that** the two different positions of the mirror (50), in which the pictures are realized, are both such positions in which the mirror is hung up freely and the angle between the two positions is shifted in a horizontal plane, wherein said straight line ($\Delta$) is defined by the vertical rotation axis of the mirror (50).

6. An apparatus for the determination of the position of an observation coordinate system (C12) associated to the picture receiving organ (28) of a camera (12A) in relation to a visible coordinate system (26), which is fixed to said camera, **characterized in that** it comprises:

   a) a mirror (50) opposite to the camera (12A) comprising an arrangement of reference points (54) with known geometric configuration, the mirror (50) being orientated such that the reflection of the visible coordinate system (26) in the mirror (50) is observable by the camera (12A);
   b) means (20) for realizing a picture of the mirror (50) by the camera (12A), in which appear the picture (56) of the visible coordinate system (26) and the arrangement of reference points (54); and
   c) means (20) for determining the position of the observation coordinate system (C12) by the camera (12A) in relation to the visible coordinate system (26) from the analysis of the picture obtained by the reflection in mirror (50) of the visible coordinate system (26) and the arrangement of reference points (54).

7. The apparatus according to claim 6, **characterized in that**, said means for determining the position of the observation coordinate system (C12) in relation to the visible coordinate system (26) comprising:

   c') means for determining the position of the mirror (50) in relation to the observation coordinate system (C12) of the camera (12A) from the analysis of the picture of the arrangement of reference points (54);
   c'') means for determining of the position of the picture (56) obtained by reflection in the mirror (50) of the visible coordinate system in relation to the observation coordinate system (C12) of the camera (12A); and
   c''') means for the calculation of the relative position of the observation coordinate system (C12) in relation to the visible coordinate system (26).

**Patentansprüche**

1. Verfahren zur Bestimmung der Position eines Beobachtungs-Koordinatensystems (C12), zugeordnet dem Bildaufnahmeorgan (28) einer Kamera (12A), in Bezug zu einem sichtbaren Koordinatensystem (26), das an dieser Kamera befestigt ist, **dadurch gekennzeichnet, dass** es folgende Schritte aufweist:

   a) es wird gegenüber der Kamera (12A) ein Spiegel (50) aufgestellt, der eine Bezugspunktanordnung (54) mit bekannter geometrischer Konfiguration aufweist, wobei der Spiegel (50) so orientiert ist, dass die Reflexion des sichtbaren Koordinatensystems (26) in dem Spiegel (50) durch die Kamera (12A) beobachtbar ist,
   b) durch die Kamera (12A) wird ein Bild des Spiegels (50) erstellt, in dem das reflektierte Bild (56) des sichtbaren Koordinatensystems (26) und die Bezugspunktanordnung (54) erscheinen; und
   c) es wird die Position des Beobachtungs-Koordinatensystems (C12) der Kamera (12A) in Bezug zu dem sichtbaren Koordinatensystem (26) ermittelt, ausgehend von der Auswertung des Bildes, das durch die Reflexion im Spiegel (50) des sichtbaren Koordinatensystems (26) und der Bezugspunktanordnung (54) erhalten wurde.

2. Verfahren nach Anspruch 1, **dadurch gekennzeichnet, dass** in Schritt c), um die Position des Beobachtungs-Koordinatensystems (C12) in Bezug zu dem sichtbaren Koordinatensystem (26) zu ermitteln:

   c') die Position des Spiegels (50) in Bezug zu dem Beobachtungs-Koordinatensystem (C12) der Kamera (12A) bestimmt wird, ausgehend von der Auswertung des Bildes der Bezugspunktanordnung (54);
   c'') die Position des Bildes (56) bestimmt wird, das durch die Reflexion im Spiegel (50) des sichtbaren Koordinatensystems (26) in Bezug zum Beobachtungs-Koordinatensystem (C12) der Kamera (12A) erhalten wurde; und
   c''') durch Berechnung die relative Position des Beobachtungs-Koordinatensystems (C12) in Bezug zum sichtbaren Koordinatensystem (26) bestimmt wird.

3. Verfahren zur Bestimmung der Position eines Beobachtungs-Koordinatensystems (C12), zugeordnet dem Bildaufnahmeorgan (28) einer Kamera (12A) in Bezug zu einer räumlichen Richtung, definiert durch eine bekannte Gerade (Δ), wobei die Kamera (12A) mit einem an ihr befestigten sichtbaren Koordinatensystem (26) ausgerüstet ist, **dadurch gekennzeichnet, dass**:

A) die Position des Beobachtungs-Koordinatensystems (C12) in Bezug zu dem sichtbaren Koordinatensystem (26) durch ein Verfahren nach einem der vorherigen Ansprüche bestimmt wird;

B) zwei Bilder desselben Spiegels (50) erzeugt werden, auf denen das sichtbare Koordinatensystem (26) erscheint, in zwei unterschiedlichen, um einem Winkel um die Gerade (Δ) verschobenen Positionen des Spiegels (50);

C) die Position des Beobachtungs-Koordinatensystems (C12) in Bezug zu der Geraden (Δ) ermittelt wird, welche dem Schnitt der zwei Ebenen des Spiegels (50) in den zwei unterschiedlichen Positionen entspricht, ausgehend von der Auswertung der durch Reflexion des sichtbaren Koordinatensystems (26) in dem Spiegel (50) erhaltenen Bilder und von der ermittelten Position des Beobachtungs-Koordinatensystems (C12) in Bezug zu dem sichtbaren Koordinatensystem (26).

4. Verfahren nach Anspruch 3, **dadurch gekennzeichnet, dass** der Schritt A) der Bestimmung der Position des Beobachtungs-Koordinatensystems (C12) in Bezug zu dem sichtbaren Koordinatensystem (26) ausgehend von einem der im Schritt B) erzeugten Bilder für die Bestimmung der Position des Beobachtungs-Koordinatensystems (C12) in Bezug zu der Geraden (Δ) durchgeführt wird.

5. Verfahren nach Anspruch 3 oder 4, **dadurch gekennzeichnet, dass** der Spiegel (50) aufgehängt wird und sich senkrecht unter der Wirkung seines Eigengewichtes erstreckt und **dadurch**, dass die zwei unterschiedlichen Positionen des Spiegels (50), in denen die Bilder erzeugt werden, beide solche Positionen sind, in denen der Spiegel frei aufgehängt ist und in einem Winkel zwischen den zwei Positionen in der waagerechten Ebene versetzt ist, wobei die genannte Gerade (Δ) durch die vertikale Drehachse des Spiegels (50) definiert wird.

6. Vorrichtung zur Bestimmung der Position eines Beobachtungs-Koordinatensystems (C12), zugeordnet dem Bildaufnahmeorgan (28) einer Kamera (12A), in Bezug zu einem sichtbaren Koordinatensystem (26), das an dieser Kamera befestigt ist, **dadurch gekennzeichnet, dass** sie folgendes aufweist:

a) einen Spiegel (50) gegenüber der Kamera (12A), der eine Bezugspunktanordnung (54) mit bekannter geometrischer Konfiguration aufweist, wobei der Spiegel (50) derart orientiert ist, dass die Reflexion des sichtbaren Koordinatensystems (26) in dem Spiegel (50) durch die Kamera (12A) beobachtbar ist;

b) Mittel (20) für die Erzeugung eines Bildes des Spiegels (50) durch die Kamera (12A), auf dem das Bild (56) des sichtbaren Koordinatensystems (26) und die Bezugspunktanordnung (54) erscheinen; und

c) Mittel (20) für die Ermittlung der Position des Beobachtungs-Koordinatensystems (C12) der Kamera (12A) in Bezug zu dem sichtbaren Koordinatensystem (26), ausgehend von der Auswertung des durch die Reflexion im Spiegel (50) erhaltenen Bildes des sichtbaren Koordinatensystems (26) und der Bezugspunktanordnung (54).

7. Vorrichtung nach Anspruch 6, **dadurch gekennzeichnet, dass** die genannten Mittel für die Ermittlung der Position des Beobachtungs-Koordinatensystems (C12) in Bezug zu dem sichtbaren Koordinatensystem (26) folgendes aufweisen:

c') Mittel für die Bestimmung der Position des Spiegels (50) in Bezug zu dem Beobachtungs-Koordinatensystem (C12) der Kamera (12A), ausgehend von der Auswertung des Bildes der Bezugspunktanordnung (54);

c") Mittel für die Bestimmung der Position des Bildes (56), erhalten durch Reflexion des sichtbaren Koordinatensystems in dem Spiegel (50) in Bezug zum Beobachtungs-Koordinatensystem (C12) der Kamera (12A); und

c"') Mittel für die Berechnung der relativen Position des Beobachtungs-Koordinatensystems (C12) in Bezug zum sichtbaren Koordinatensystem (26).

## FIG.1

FIG.2A

FIG.2B

EP 1 003 013 B1

FIG.3

FIG.4